(19)

Europäisches
Patentamt
European
Patent Office
Office européen
des brevets

(11) **EP 2 492 391 A1**

(12) **EUROPEAN PATENT APPLICATION**

(43) Date of publication:
**29.08.2012 Bulletin 2012/35**

(51) Int Cl.:
*D06M 11/46* [(2006.01)]   *B01J 21/06* [(2006.01)]
*B01J 35/06* [(2006.01)]   *D21H 21/14* [(2006.01)]

(21) Application number: **11001600.3**

(22) Date of filing: **26.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Clariant International Ltd.**
**4132 Muttenz (CH)**

(72) Inventors:
• **Steffanut, Pascal**
 **Village Neuf 68128 (FR)**
• **Decher, Gero**
 **67083 Strasbourg (FR)**

• **Fontsova, Dasha**
 **Kyiv 03037 (UA)**
• **Keller, Valerie**
 **67203 Oberschaeffolsheim (FR)**
• **Keller, Nicolas**
 **67810 Holtzheim (FR)**
• **Olivier, Felix**
 **67810 Holtzheim (FR)**

(74) Representative: **Jacobi, Carola et al**
 **Clariant Produkte (Deutschland) GmbH**
 **Patent Management**
 **Am Unisys-Park 1**
 **65843 Sulzbach (DE)**

(54) **Optimized layer-by-layer assemblies for indoor photo-catalytical pollutants removal**

(57)   Photocatalytically active textile or paper tissue for removal and decomposition of organic and inorganic pollutants from the surrounding atmosphere under visible light and/or UV-A irradiation comprising a woven or non-woven support and a coating layer, which comprises catalytically active $TiO_2$.

**EP 2 492 391 A1**

**Description**

Background of the invention

Indoor air quality has become of great concern nowadays due to increased amounts of personal time spent in indoor environment. Some studies showed that the level of pollution in indoor environment exceeds that of outdoor environment. Indoor air pollutants mainly include nitrogen oxides, carbon oxides and volatile organic compounds (VOC). VOC are emitted from various sources such as office equipment, construction materials, consumer products, cooking, combustion, etc (Wang, S.; Ang, H. M.; Tade, M. O. Environment International 2007, 33, 694-705).

Another problem considered here is the odor control. A strong interest is directed towards elimination and not only masking of offensive odors in closed area, such as odors of ammonia, trimethylamine, hydrogen sulfide, acetaldehyde, etc., to secure a more comfortable living space. Therefore, air cleaning systems are required to improve the indoor air quality.

The main strategies are based on utilization of absorbents (activated carbon), pollutants chemical binders, catalysts for thermal oxidation of pollutants and photocatalysts. The first two methods have a drawback of short life terms due to the saturation of material; and thermal oxidation processes are expensive. Nowadays, photo-catalytic oxidation (PCO) is the most promising technology for air purification.

Photo-degradation usually occurs at room temperature and pollutants are oxidized to $H_2O$ and $CO_2$. In principle, PCO processes occur on the surface of a semiconductor when it is irradiated with light with an appropriate wavelength able to excite its electrons from the valence band to the conduction band creating primary reactive species - electrons and holes.

Among all the photo-catalysts, titanium dioxide ($TiO_2$) is the most important and widely used because of its chemical stability and biologically inertness, In addition, Titanium dioxide is cheap, easy to produce and to apply. Besides it has suitable positioned valence and conduction bands (Linsebigler, A. L.; Lu, G.; Yates, Jr, J. T. Chem. Rev. 1995, 95, 735 - 758).

For indoor applications, one of the remaining challenges is that $TiO_2$ has a large band gap and therefore absorbs selectively UV-light that constitutes only 5 % of solar spectra. Different methods have been proposed to shift the edge of $TiO_2$ absorption band to visible light region. However, all of them require substantial additional costs thus increasing the price of the final catalyst.

The most interesting challenge is the application of photo-catalysts on woven and non-woven supports like textiles and papers. On such supports, too rigid matrices where such particles may be trapped-in may lead to handle-feeling modifications, whereas absences of such matrices may raise some permanency problems of these photoactive catalysts under repeated wash cycles. Obviously, there is a need for a new and easy technique to incorporate these materials onto textile and paper surfaces without disturbing their overall properties.

Among the different techniques used to modify surfaces, the deposition of polyelectrolyte multilayers (PEM) has emerged as a very easy handling and versatile tool. Layer-by-Layer deposition method (LbL) is often based on electrostatic interactions between oppositely charged polyelectrolytes or particles and allows for construction of thin films by alternate deposition of negatively and positively charged layers. The advantages of the LbL method are:

1) Desired quantities of material can be applied homogeneously in a controlled way;
2) Method ensures good adhesion of the film to the substrate;
3) LbL films can be constructed on a variety of substrates; and film properties are almost independent of the nature of substrate;
4) Method allows for the deposition of small quantities of materials what is important for expensive products;
5) Structure of nanocomposites can be tailored in order to get the desired properties;
6) Well ordered film architecture can result in new functional properties.

The instant invention presents an easy procedure to obtain visible light active $TiO_2$- based coating for efficient indoor and outdoor air cleaning.

It is an object of the invention to provide an active surface for eliminating polluting substances present in the air near the surface, such as, for example, NO or $H_2S$. The textile or paper material, bearing the titanium dioxide applied in between polyelectrolyte layers, is then able to decompose many gases or harmful substances such as thiols, mercaptans, formaldehyde, acetaldehyde, etc. having an unpleasant smell. The decomposition of such gases or substances eliminates the bad smells associated therewith.

In the last few years, Layer-by-Layer (LbL) method has been widely used to assemble catalysts for different applications. Most of $TiO_2$-containing LbL films were tailored for degradation of dyes in solution. There are just few examples of utilization of LbL catalytically active films for degradation of gas-phase pollutants.

Hammond et al. WO 2010/021971 proposed multilayer metal oxide-containing coatings for destruction of allyl alcohol under UV irradiation. The application was proven to be effective for only electrospun fibers and only under UV irradiation; the structure of LbL films was not optimized in order to get the highest possible activity.

Keller-Spitzer, V.; Keller, N.; Grandcolas, M.; Louvet, A. Brevet française N° 0801232 described utilization of LbL films containing $WO_3$ modified titanate nanotubes for photocatalytic removal of diethyl sulfide and dimethylmethylphosphonate, the simulated chemical warfare materials under solar light irradiation. Here the possibility of utilization of such films was stated, but neither exemplified nor optimized in order to get the highest possible activity.

Krogman, K. C.; Zacharia, N. S.; Grillo, D. M.; Hammond, P. T. Chem. Mater. 2008, 20, 1924 - 1930 have investigated the performance of LbL film containing titanium dioxide ($TiO_2$) nanoparticles for the decomposition of chloroethyl ethyl sulfide, a warfare agent. However, the amount of applied catalyst was not quantified; and the number of deposited layers in order to get significant photocatalytic activity was 50, which is pretty high. Furthermore, the utilization conditions of the film are limited to UV light irradiation; and the film structure was not optimized in order to get the highest possible activity.

Shibata, T.; Sakai, N.; Fukuda, K.; Ebina, Y.; Sasaki, T. Phys. Chem. Chem. Phys. 2007, 9, 2413-2420 studied PCO of gaseous 2-propanol via $TiO_2$ nanosheet rich LbL films. In addition, Liu, Z.; Zhang, X.; Nishimoto, S.; Jin, M.; Tryk, D. A.; Murakami, T.; Fujishima, A. Langmuir 2007, 23, 10916 - 10919 used LbL technique to prepare new $TiO_2$ nanostructures possessing enhanced photocatalytic activity for the destruction of acetaldehyde. However, according to these techniques, the polyelectrolyte should be removed from the films by calcination or exposure to UV-C irradiation, and both methods are not applicable in case of substrates as textiles and paper.

As it can be seen, none of the previous art was focused on destruction of odors or VOC accomplished by LbL coated textiles or papers under visible light irradiation. Therefore there is still a high demand for easy solution for odor control and air cleaning in indoor environment.

The present invention relates to the creation of photocatalytically active textile or paper tissues for removal and decomposition of organic and inorganic pollutants from surrounding atmosphere under visible light and/or UV-A irradiation comprising a woven or non-woven support and a coating layer, which comprises catalytically active $TiO_2$.

The invention further relates to optimization of LbL films by changing the nature of polyelectrolyte and type of $TiO_2$ catalyst used in order to get the best photocatalytic performance.

The invention reveals the advantageous adsorption properties of LbL films comprising non-calcined titanate nanotubes and describes efficient combinations of catalysts assembled in LbL way for quick removal of pollutants from ambient air and their subsequent decomposition.

The photocatalytically active tissue comprises a support and a coating.

Suitable supports are any desired fibrous materials, particularly textile materials or paper materials, as occurs in the textile or the paper industry, namely natural or also synthetic or semi-synthetic materials and blends thereof, in particular, materials containing natural [principally paper cellulose], modified or regenerated cellulose [principally cotton ("CO") or viscose], natural or synthetic polyamide [principally wool ("WO") or fully synthetic polyamides ("PA")], polyester ("PES"), polyurethane ("PU") or polyacrylonitrile ("PAN"), and blends thereof (e.g. PES/CO, PES/WO, PA/PU and PAN/CO), polyurethane-polyurea copolymer elastane.

The materials can be in any desired processing form, for example as loose fibres, filaments, threads, yarn strands and bobbins, woven fabrics, knitted fabrics (particularly tricot), bonded or non-bonded nonwovens, felts, carpets, curtains, velvet, terry cloth or tufted fabrics or also ready-made or half-ready-made goods. The LbL coating is preferably applied on cross-wound bobbins ("cheeses"), textile webs, textile tubular goods (in particular knitted tubular goods) or piece goods.

Coating is applied in layer-by-layer way by alternate exposure of Support to positively and negatively charged polymer solutions or particle suspensions, with or without rinsing steps in between. Despite the coating is created in LbL sequence, it doesn't necessarily have a layered structure (See Fig. IA). The coating is prepared by a variety of combinations of two or more of the following deposition steps:

    a) deposition of polycation,
    b) deposition of polyanion,
    c) deposition of catalytic particles,
    d) deposition of particles of adsorbent.

As can be seen from Fig. IA, the film structure does not appear to be "layered". This is due to the positional disorder of nanoparticles of the same "layer" in the direction of the layer normal. Only when the thickness of the polymer layers becomes substantially thicker (several polyelectrolyte layer pairs required), it can "smooth out" the nano-roughness of the particle layers and films with a stratified structure would be observed. Subsequently, the word "layer" will be used for simplicity reason even in the absence of distinguishable "layers" in the films.

Polycationic layers may comprise the following types of polymers or mixtures made of. Examples include homopolymers of the following monomers: dimethyldiallyl ammonium chloride, ethylene-imine, methacrylamido propyl trimethyl ammonium chloride, 2-methacryloyloxyethyl trimethyl ammonium chloride, 2-methacryloyloxyethyl trimethyl ammonium methylsulfate.

Polyanionic layers may comprise the following types of polymers or mixtures made of. Examples include homopolymers of the following monomers: acrylic acid, methacrylic acid, vinyl acetic acid, crotonic acid, allylacetic acid, 4-methyl-4 pentonic acid, vinyl sulfonate, styrene sulfonate, phosphate and acrylamide methyl propane sulfonic acid. Examples also include copolymers of ammonium acryloyl dimethyltaurate and carboxyethyl acrylate, other copolymers.

In one of embodiments, layers of polycations and polyanions are deposited from solutions of polycations and polyanions having concentrations ranging from 0.001 % w/v to 10 % w/v.

In one of embodiments, pH of solutions of polycations and polyanions is adjusted to the value of pH of alternately deposited catalytic or absorbing particles under condition that at the adjusted pH value polycation and polyanion maintain the degree of surface charge which is sufficient for electrostatic self-assembly process.

Catalytic layer can be, without limitation, made of titanium dioxide ($TiO_2$) based catalysts. $TiO_2$ based catalysts include without limitations $TiO_2$ itself in different forms, materials obtained from $TiO_2$ such as titanate nanotubes TiNT, and $TiO_2$ modified in different ways, for example by doping with metals (Ag, Au, etc.), non-metal elements (nitrogen, etc.), another semiconductor ($WO_3$, etc) or by sensitization with a suitable sensitizer (dye, etc.).

In one of the embodiments, the catalytic layer is deposited from the suspension of catalyst. Titanium dioxide of the solid part of suspension may be commercially available like Evonik Aeroxide $TiO_2$ P25, Crystal Global S5-300A and others or may be synthesised by known methods in our laboratory, e.g. titanate nanotubes TiNT, nano-$TiO_2$. The liquid part of the colloidal suspension comprises distilled water or water of higher quality having electric conductivity not greater than 1.5 pS and pH comprised in the range between approximately pH 2.5 and approximately pH 9.5 to ensure the proper surface charge of particles. Particles of catalyst can be presented by spherical particles, nanotubes, nanosheets, nanorods, etc.

The concentrations of the deposition suspensions of catalysts can range from 0.01 % w/v to 25 % w/v. Suspension may contain from approximately 0.1 % w/v to approximately 5 % w/v of surface-active agents, if necessary. Surface-active agents, also known as surfactants, may be glycol or polyethylene glycol or polyethylene glycolphenyl ether or polyethylene glycol ether or polyoxyethylene stearyl ether or polyethylene glycolhexadecyl ether or polyethylene glycol octadecyl ether or polyethylene glycol dodecyl ether. The surfactants act as stabilisers of the suspension and enable the colloidal suspension to be distributed evenly on any support. Cationic surfactants like ammonium type surfactants may also be used in the formulation described above to enhance the overall stability of the suspension as well as to adjust the final pH.

The absorbent material can be, without limitations, zeolites (MCM-41, etc.), $TiO_2$ based catalyst having high surface area (TiNT, Hombikat UV100) or other high surface area materials.

The concentrations of the polyanionic and/or polycationic, catalytic and/or absorbing Coating of the invention, can vary in broad limits depending on the type and nature of the Support and the desired effect and is advantageously in the range from 0.02 to 3 %, preferably from 0.05 to 1 % by weight of active cationic and/or anionic polymer, catalyst and/or absorbent, based on the dry weight of the substrate.

The thickness of Coating can vary in the range from several nanometers to hundreds of micrometers. In the preferred embodiment, the thickness of coating is in the range of 300 nm to 1 $\mu$m, preferably in the range from 50 nm to 1 $\mu$m.

The number of applied layer pairs and their content can vary and are determined by the desired photocatalytic properties of the final tissue. Number of deposition steps equal to number of deposited layers can vary from 2 to 200, in the preferred embodiment, from 2 to 10.

The LbL coating process of the invention is advantageously carried out as the final finishing step of the material, preferably after bleaching, an optical brightening process and/or a dyeing process. The LbL coating process can be carried out by successive padding, dipping or spraying of the polycationic layers, the $TiO_2$ containing layer and the polyanionic layers. The deposition can likewise be carried out by methods which are conventional per se, for example by dipping, padding, foam application or spraying, preferably at temperatures of 15 - 40 ˚C and at pH values in the range from 2.5 to 9.5. After deposition, the treated goods can be dried in a conventional manner, for example at temperatures from 30 to 190 ˚C, preferably from 60 to 170 ˚C.

The aqueous compositions containing the polycationic polymers, catalytic particles and the polyanionic polymers, described above, are distinguished by their stability, particularly storage and transport stability, and can be rapidly diluted to any desired extent with water of adjusted pH if needed. The aqueous compositions according to the invention, both in dissolved form and in emulsified form, in concentrated or also diluted form, and the liquors produced from them are particularly distinguished by their excellent shear force stability, and the application liquors are, in particular, stable and have an unchanged action even under strong dynamic loading of liquor and/or textile material. They are consequently particularly suitable for use in fast-running machines, for example for finishing in the winch beck, in the jigger, in yarn dyeing machines, in garment dyeing machines, and in particular in jet dyeing machines, including those in which extremely high shear forces act (both in the liquor circulation in the dyeing machine and also in the liquor circulation pumps). They are also very suitable for the finishing of fabrics on the beaming machines and of cross-wound bobbins ("cheeses"); in this case too, the strong dynamic loading of the liquor, which is forced from the interior of the beam or cheese to the outside or vice versa through the fabric wound on the beam or through the threads of cheese, has practically no adverse effect on the compositions of the invention and on the finishing achieved therewith. Furthermore, they are also particularly suitable for impregnation processes in which high shear forces act, for example for spraying-on, if desired in the form of foam (in which the liquor is forced through spray nozzles in order to spray it onto the goods) or for vacuum impregnation processes (in which the goods sprayed with the treatment liquor are fed over at least one vacuum sieve so that the excess liquor is removed vigorously and rapidly by suction and fed back to the impregnation using a circulation pump).

When used separately in different bathes or by successive spraying, the compositions of the invention are also stable in the treatment liquors to any occasional impurities which may originate, for example, as residues from a prior treatment of the substrate, in particular containing in the aqueous liquors possible dye, brightener and/or auxiliary residues.

Despite the numerous advantages of LbL technique for construction of thin films containing $TiO_2$ based catalysts, the activity of the catalysts in the film can severely drop if compared to that of bare catalyst due to the influence of the neighboring polyelectrolyte: polyelectrolyte can block the active sites of the catalysts or restrict the diffusion of pollutant molecules inside the film. Therefore, the structure of such films should be optimized in order to get maximum activity. We have compared different polyelectrolytes and revealed those that do not significantly decrease the photocatalytic performance of $TiO_2$ based catalysts. By varying the catalysts, we have demonstrated that the influence of the polyelectrolyte on different $TiO_2$ based catalysts in LbL films is similar.

As it is known, light of the proper wavelength is necessary for photo-catalytic oxidation processes to take place. In other words, in the absence of light (in the dark), no photo-catalytic processes can occur. Therefore, there is a need for air cleaning solutions in the absence of irradiation.

It is another object of this invention to provide an air cleaning solution in the absence of irradiation. In one of the embodiments, LbL coating of Support comprises several types of materials in order to get combination of adsorption and catalytic properties. Combination of these two properties is highly desirable and overcomes the limitations of individual materials: it prevents the saturation of adsorbents and makes the composition effective in the absence of irradiation.

Textile or paper tissue according to at least one of the preceding claims, wherein coating is prepared by alternate deposition of non-calcined titanate nanotubes (TiNT) with a positively charged polymer (e.g. PDDA), then the deposition of several interstitial polyelectrolyte layer pairs in order to increase adhesion of the following layers of catalyst" and finally by the alternate deposition of highly active catalyst with a negatively charged polymer(e.g. PVS) and preferably has the following structure:

$$PEI/(TiNT/PDDA)_n/(PVS/PDDA)_m/(PVS/S5\text{-}300A)_l$$

In such films non-calcined TiNT (or another adsorbing material) can adsorb pollutants in the dark, and liberate the adsorbed compounds under irradiation. The liberated pollutants are immediately oxidized in the following layers of catalyst.

Examples:

Materials and Methods

Materials:

Poly(ethylene imine) (Lupasol WF, $\overline{M_W} \sim 25,000$ g/mol) was purchased from BASF (Ludwigshafen, Germany), poly(sodium 4-styrenesulfonate) ($\overline{M_W} \sim 70,000$ g/mol), sodium polyphosphate (96 %), and poly(diallyldimethylammonium chloride) ($\overline{M_W}$ 100,000 - 200,000 g/mol, 20 % water solution) were purchased from Sigma-Aldrich (Lyon, France), polyvinylsulfate K-salt ($\overline{M_W} \geq 245,000$ g/mol) was purchased from Serva Electrophoresis GmbH (Heidelberg, Germany), sodium chloride (99.9 % Cellpure) was purchased from Carl Roth Gmbh (Karlsruhe, Germany), nitric acid (68 % min) was purchased from VWR (Fontenay-sous-Bois, France). Aristoflex products were obtained from Clariant.

Aeroxide $TiO_2$ P25 was purchased from Evonik Degussa Corporation (Germany), S5-300A ($TiO_2$ 20 % suspension in water, pH 1) was purchased from Millenium Inorganic Chemicals, Inc. (France) and used for deposition as received. Titanate nanotubes were synthesized by the hydrothermal treatment of Aeroxide $TiO_2$ P25 powder in 10 M NaOH solution at 130 °C, followed by washing with 1 M HCl and drying (Kasuga, T.; Hiramatsu, M.; Hoson, A.; et al. Langmuir 1998, 14, 3160 - 3163). $TiO_2$ nanoparticle colloidal solutions referred to here as nano-$TiO_2$ (mean particle diameter 9 nm, concentration 1.35 g/l) were prepared through the controlled hydrolysis of titanium tetraisopropoxide/iso-propanol (5:95, v/v) solution in water at pH 2 according to the procedure described in literature (Bahnemann, D.; Henglein, A.; Lilie, J.; Spanhel., L. J. Phys. Chem. 1984, 88, 709), and used for depositions as prepared.

Silicon wafers were bought from WaferNet Inc. (San-José, USA) and quartz slides from Thuet B. (Blodelsheim, France). Ultrapure water with a resistivity of 18.2 MΩ · cm was obtained by purification with a Milli-Q Gradient system (Millipore, Molsheim, France) and was used directly after production. Glass reactors were hollow tubes of Pyrex glass having two 29/32 joints, an inner diameter of 27 mm, an outer diameter of 29 mm and a total length of 420 mm. Cylinders used for deposition were 450 mm high, with diameter of 50 mm. Textiles were cotton tissues provided by Clariant Schweiz AG (Reinach, Switzerland).

Methods:

Substrate preparation. Glass reactors were dipped into cylinders filled with KOH/iso-propanol cleaning solution for at least 2 h and then rinsed extensively with deionised water and finally with ultrapure water. Silicon wafers and quartz slides were cleaned by immersion into $CH_3OH/HCl$ (50:50, v/v) mixture for 2 h followed by immersion into $H_2SO_4$ (98 %) for at least 2 h and finally by extensive rinsing with ultrapure water. Textiles were cleaned by immersion into 5 % Hellmanex solution in ultrapure water for several days and subsequent abundant rinsing with deionized water.

LbL deposition

Suspensions of catalysts. Suspensions of titanate nanotubes (TiNT) were prepared as followed: 1 g of TiNT was added to 900 ml of ultrapure water, then pH was adjusted to 1 - 1.5 with concentrated $HNO_3$, the mixture was stirred for 1 h, and then acid was rapidly back-titrated with tetrabutylammonium hydroxide (TBAOH) up to pH 9, then the volume of suspension was adjusted to 1 l with ultrapure water. The resulting suspensions were translucent, stable for several months.

Suspensions of titanium dioxide (Aeroxide $TiO_2$ P25) were prepared as followed: 10 g of $TiO_2$ was added to 1 l of ultrapure water at pH 2.5 adjusted with $HNO_3$, stirred for 15 h and finally centrifuged at 5,000 rpm for 7 min. Thus obtained suspensions had a nanoparticle concentration of about 0.05 % and were stable for several days.

Solutions:

Poly(ethylene imine) (PEI) solutions were prepared at a concentration of 3 g/l in ultrapure water while poly (sodium 4-styrenesulfonate) PSS, polyvinylsulfate (PVS), sodium polyphosphate (PP) solutions were prepared at a concentration of 1 g/l in ultrapure water at pH 2.5 adjusted with $HNO_3$. Aristoflex (Ar) solutions were prepared in ultrapure water at pH 2.5 adjusted with $HNO_3$ at a concentration of 0.1 g/l in case of LbL assembly with S5-300A, and at a concentration of 0.05 g/l in case of LbL assembly with Aeroxide $TiO_2$P25.

Poly(diallyldimethylammonium chloride) (PDDA) solutions had pH 9 adjusted with TBAOH and were prepared at a concentration of 1 g/l in 0.5 M sodium chloride solution in ultrapure water or in ultrapure water in case of deposition on textiles.

General procedures for LbL deposition

For all LbL systems, the first layer applied was PEI layer. The substrate was dipped into PEI solution for 20 min, then rinsed under flow of ultrapure water, and then dipped into ultrapure water for 3 min. Rinsing was repeated 3 - 4 times.

PEI/(PSS/P25)$_k$, PEI/(PVS/P25)$_l$, PEI/(PSS/nano-$TiO_2$)$_m$, PEI/(PVS/nano-$TiO_2$)$_n$, PEI/(PP/nano-$TiO_2$)$_p$, PEI/(PVS/S5-300A)$_q$, PEI/(Ar/P25)$_s$, PEI/(Ar/S5-300A)$_t$ systems:

For the systems where suspensions of catalyst had acidic pH, the second applied layer was negatively charged polyelectrolyte (PE) layer. The substrate was dipped into corresponding PE solution for 20 min then rinsed under flow of ultrapure water at pH 2.5 adjusted with $HNO_3$, and then dipped into ultrapure water at pH 2.5 for 3 min. Rinsing was repeated 3 to 4 times. The next layer was $TiO_2$ deposited by dipping the substrate into corresponding $TiO_2$ suspension for 30 min followed by rinsing under flow of ultrapure water at pH 2.5. Then the substrate was dipped into ultrapure water at pH 2.5 for 3 min. Rinsing was repeated 3 - 4 times. Thus, the first layer pair was built. By repetition of the described procedure (starting from layer 2), the desired number of layer pairs was constructed. The last applied layer was always $TiO_2$.

PEI/TiNT/(PDDA/TiNT)$_b$ and (PEI/TiNT)$_c$ systems:

In case of TiNT dispersed under basic pH, the second layer was fabricated by dipping the substrate into TiNT dispersion for 20 min, followed by rinsing under flow of ultrapure water. Then the substrate was dipped into ultrapure water for 3 min. Rinsing was repeated 3 times. The next layer was positively charged PEI layer. The substrate was dipped into PEI solution for 20 min, then rinsed under flow of ultrapure water, and then dipped into ultrapure water for 3 min. Rinsing was repeated 3 - 4 times. Thus, the first layer pair was built. By repetition of the described procedure (starting from layer 2), the desired number of layer pairs was constructed. The last applied layer was always TiNT.

LbL deposition on model surfaces was monitored by ellipsometry or UV-visible spectroscopy methods.

LbL deposition on reactors

Deposition set-up consisted of a set of cylinders containing polyelectrolyte solutions and $TiO_2$ suspensions and 3 - 4 rinsing water solutions. After film deposition, the reactor was dried at 70 °C for 1 h, the external coating was removed with paper towel and the reactor was stored in dark till the activity test.

Reactor's surface area irradiated during the test is 0.0206 $m^2$. The amounts of catalysts in the irradiated area, and the amounts of catalysts deposited per a layer pair are estimated to be, for each system, respectively

| | | | |
|---|---|---|---|
| PEI/(PSS/P25)$_k$: | 0.70 | mg/layer | 34.2 | mg/$m^2$ |
| PEI/(PVS/P25)$_l$: | 0.83 | mg/layer | 40.7 | mg/$m^2$ |
| PEI/(PSS/nano-TiO$_2$)$_m$: | 0.093 | mg/layer | 4.52 | mg/$m^2$ |
| PEI/(PVS/nano-TiO$_2$)$_n$: | 0.149 | mg/layer | 7.23 | mg/$m^2$ |
| PEI/(PP/nano-TiO$_2$)$_p$: | 0.095 | mg/layer | 4.61 | mg/$m^2$ |
| PEI/(PVS/S5-300A)$_q$: | 0.785 | mg/layer | 38.1 | mg/$m^2$ |
| PEI/TiNT/(PDDA/TiNT)$_b$: | 1.91 | mg/layer | 92.8 | mg/$m^2$ |
| (PEI/TiNT)$_c$: | 3.0 | mg/layer | 146.3 | mg/$m^2$ |
| PEI/(Ar/P25)$_s$: | 0.83 | mg/layer | 40.2 | mg/$m^2$ |

LbL deposition on textiles

LbL films were fabricated on textiles with the dimensions of 0.3 m x 0.08 m. The apparent surface area (that means geometrical surface area, calculated as Width x Length) irradiated during the test was around 0.02 $m^2$. All the rinsing steps were carried out with deionised water instead of ultrapure water, number of rinsing steps was 4, and their duration was 5 min. After film deposition, textiles were dried at 70 °C for 1 h or more, and stored in dark till the activity test.

Deposition of a polymer layer or a catalyst layer or an adsorbent layer on textiles can be performed by spraying as well. In a typical procedure, solution of a polymer or suspension of a catalyst is sprayed on both sides of a textile during 10 seconds from the distance of 10 - 15 cm. Polymer or catalyst are allowed to adsorb for 10 min, then the textiles are rinsed as described above. The deposition of TiNT and Ar was performed in this way.

Ultraviolet - Visible Spectroscopy

UV-Vis absorption spectra of coated quartz slides and $TiO_2$ suspensions were recorded on a Varian Cary 500 Scan spectrometer. The amount of applied catalyst (mg/$m^2$) was estimated from these data (See Figures II, III, IV).

Ellipsometry

Measurements of the film thickness were carried out with a PLASMOS SD 2300 ellipsometer operating at the single wavelength of 632.8 nm and a constant angle of 70°. The refractive index of the film was assumed to be constant (n = 1.465). While this procedure leads to slightly incorrect values with respect to the absolute film thicknesses, it allows for the quick and precise determination of relative film thicknesses. For each data point, 10 different thickness measurements were randomly taken on different film regions over an area of a few $cm^2$ of the film surface (See Figure I).

Atomic Force Microscopy

Atomic force microscopy was carried out with a Veeco Multimode Nanoscope IIIA (Digital Instrument). AFM images were obtained in tapping mode with silicon cantilevers (k =40 N/m, $f_0$=300 kHz).

Photocatalytic tests

Activity tests were performed in a single-pass annular concentric reactor made of two coaxial tubes (Pyrex glass) between which the reactant mixture was passing through. Extensive details concerning both photocatalytic reactor and device are reported in Keller, V.; Bernhardt, P.; Garin., F. J. Catal. 2003, 215, 129-138. The outer tube was covered with LbL deposited film as described above. In case of deposition on textiles, the tissue was place in between the two tubes. The inner tube had a diameter of 17/21 mm. The composition of the reactant feed was $H_2S$ (15 ppm, corresponding to 20.9 mg of $H_2S$ per $m^3$), air (93.8 vol. %), and balanced He. Gas mixture was fed through mass-flow controllers with a total flow of 100 $cm^3$/min corresponding to a gas velocity of 0.737 cm/s inside the reactor and a residence time of 36 s (calculated for the effective length of the reactor, equal to length of the lamp). Before the photocatalytic reaction, the film was first exposed to the polluted air stream without illumination until dark-adsorption equilibrium was reached. Afterwards the illumination was switched on. Illumination was carried out using a commercially available 8W black light lamp (Sylvania F8W/BLB-T5, 263 mm long) with total irradiance of 43.5 $W/m^2$ and maximum intensity at 365 nm, or 8 W daylight lamp (Osram L 8W/12-950, 263 mm long) with total irradiance of 43.9 $W/m^2$. The lamp was placed inside the inner tube of the reactor. $H_2S$ and $SO_2$ were analyzed on-line every 3 minutes by a Pulsed Flame Photometric Detector (PFPD) coupled to a CP-Sil 5 CB column on a gas chromatograph (Varian 3800).

Summarized results of photocatalytic tests

Pollutant, concentration, flow: $H_2S$, 15 ppm, 100 mL/min flow unless other is stated.

Table 1

| Fig. | Film structure | Surface | Light source | Conversion maximum (%) | Deactivation | Notes |
|---|---|---|---|---|---|---|
| V | PEI/(PSS/P25)$_5$ | glass | UV-A | 100 | quick | |
| V | PEI/(PSS/P25)$_{10}$ | glass | UV-A | 100 | quick | |
| V | PEI/(PSS/P25)$_{15}$ | glass | UV-A | 100 | quick | |
| VI | PEI/(PVS/P25)$_5$ | glass | UV-A | 100 | slow | |
| VI | PEI/(PVS/P25)$_{10}$ | glass | UV-A | 100 | slow | |
| VI | PEI/(PVS/P25)$_{15}$ | glass | UV-A | 100 | slow | |
| VII | PEI/(PSS/nano-TiO$_2$)$_{10}$ | glass | UV-A | 10 | quick | |
| VII | PEI/(PSS/nano-TiO$_2$)$_{20}$ | glass | UV-A | 25 | quick | |
| VII | PEI/(PSS/nano-TiO$_2$)$_{30}$ | glass | UV-A | 40 | quick | |
| VII | PEI/(PSS/nano-TiO$_2$)$_{40}$ | glass | UV-A | 55 | quick | |
| VIII | PEI/(PP/nano-TiO$_2$)$_{10}$ | glass | UV-A | 23 | slow | |
| VIII | PEI/(PP/nano-TiO$_2$)$_{20}$ | glass | UV-A | 100 | slow | |
| IX | PEI/(PVS/nano-TiO$_2$)$_5$ | glass | UV-A | 23 | slow | |
| IX | PEI/(PVS/nano-TiO$_2$)$_{10}$ | glass | UV-A | 71 | slow | |
| IX | PEI/(PVS/nano-TiO$_2$)$_{15}$ | glass | UV-A | 83 | slow | |
| IX | PEI/(PVS/nano-TiO$_2$)$_{20}$ | glass | UV-A | 96 | slow | |

(continued)

| Fig. | Film structure | Surface | Light source | Conversion maximum (%) | Deactivation | Notes |
|------|----------------|---------|--------------|------------------------|--------------|-------|
| X | PEI/ (PVS/S5-300A)$_5$ | glass | UV-A | 100 | slow | |
| X | PEI/ (PVS/S5-300A)$_{10}$ | glass | UV-A | 100 | slow | |
| X | PEI/ (PVS/S5-300A)$_{15}$ | glass | UV-A | 100 | slow | |
| X | PEI/ (PVS/S5-300A)$_5$ | glass | Visible | 70 | quick | |
| - | (PEI/TiNT)$_{10}$ | glass | UV-A | 35 | quick | |
| - | PEI/TiNT/(PDDA /TiNT)$_{16}$ | glass | UV-A | 87 | quick | Film completely adsorbed pollutant for 24 h |
| - | PEI/TiNT/(PDDA /TiNT)$_{29}$ | glass | UV-A | 17 | slow | Pollutant: CH$_3$OH, 50 ml/min flow Film completely adsorbed pollutant for 30 min |
| XI | PEI/PVS/S5-300A | textile | UV-A | 100 | slow | |
| XI | PEI/PVS/S5-300A | textile | Visible | 75 | slow | |
| XI | PEI/ (PVS/S5-300A)$_2$ | textile | Visible | 100 | slow | |
| XI | PEI/ (PVS/S5-300A)$_5$ | textile | Visible | 100 | slow | |
| XII | PEI/(Ar/P25)$_5$ | glass | UV-A | 100 | quick | |
| XII | PEI/(Ar/P25)$_{10}$ | glass | UV-A | 100 | slow | |
| XII | PEI/(Ar/P25)$_{15}$ | glass | UV-A | 100 | slow | |
| XIII | PEI/Ar/S5-300A | textile | Visible | 100 | slow | |
| XIII | PEI/(Ar/S5-300A)$_2$ | textile | Visible | 100 | slow | |
| XIII | PEI/(Ar/S5-300A)$_5$ | textile | Visible | 100 | slow | |
| XIV | PEI/(Ar/S5-300A)$_2$ | textile | Visible | 80 ppm | slow | Pollutant: acetaldehyde, 115 ml/min flow, mineralization: 90 % |
| XV | PEI/(Ar/S5-300A)$_2$ | textile | Visible | 60 ppm | slow | Pollutant: methyl ethyl ketone, 115 ml/min flow, mineralization: 40 % |
| XVI | PEI/(Ar/S5-300A)$_2$ | textile | Visible | 83 ppm | slow | Pollutant: ammonia, 115 ml/min flow |

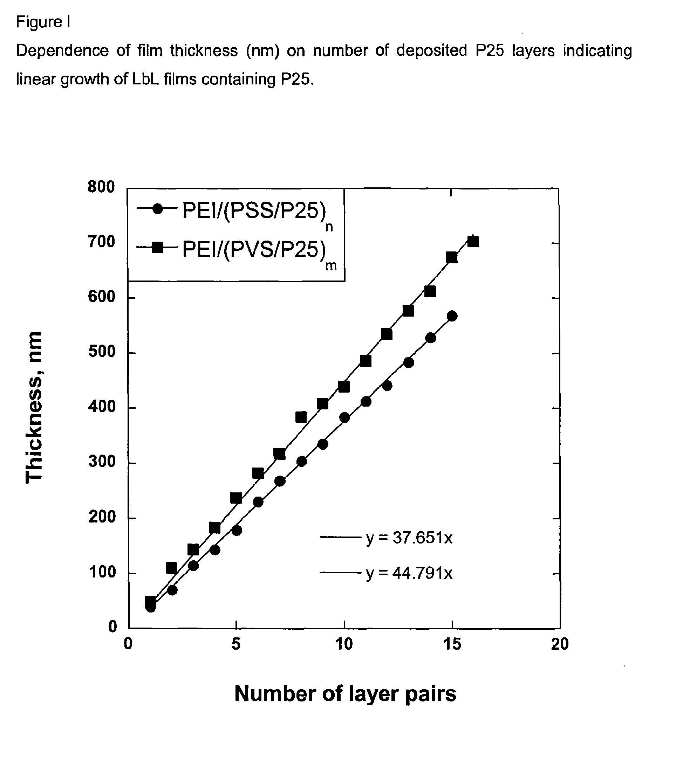

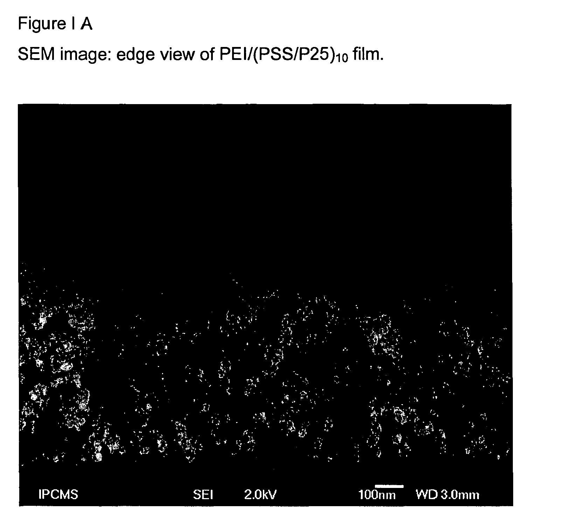

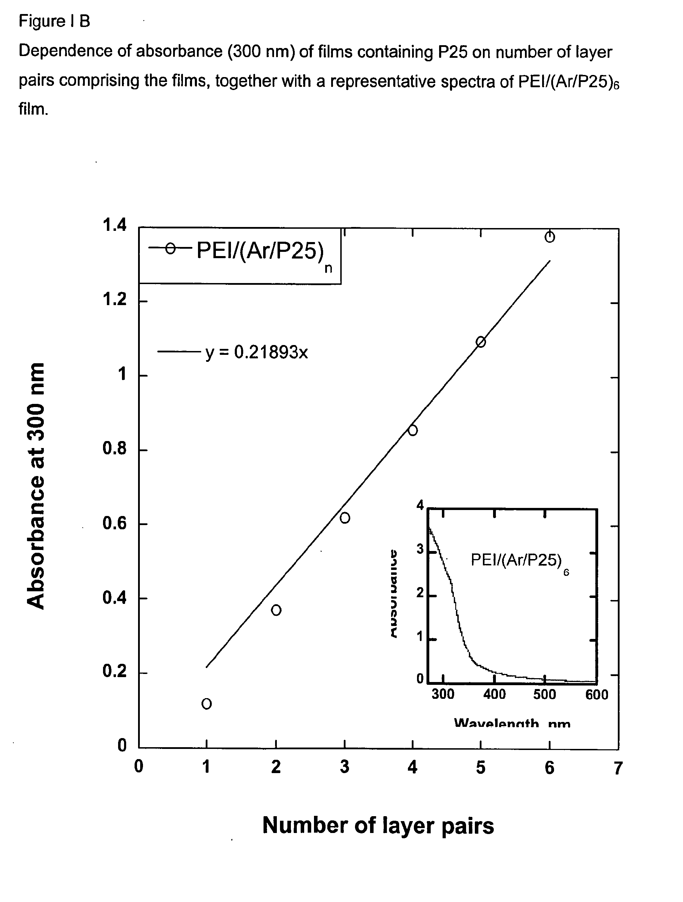

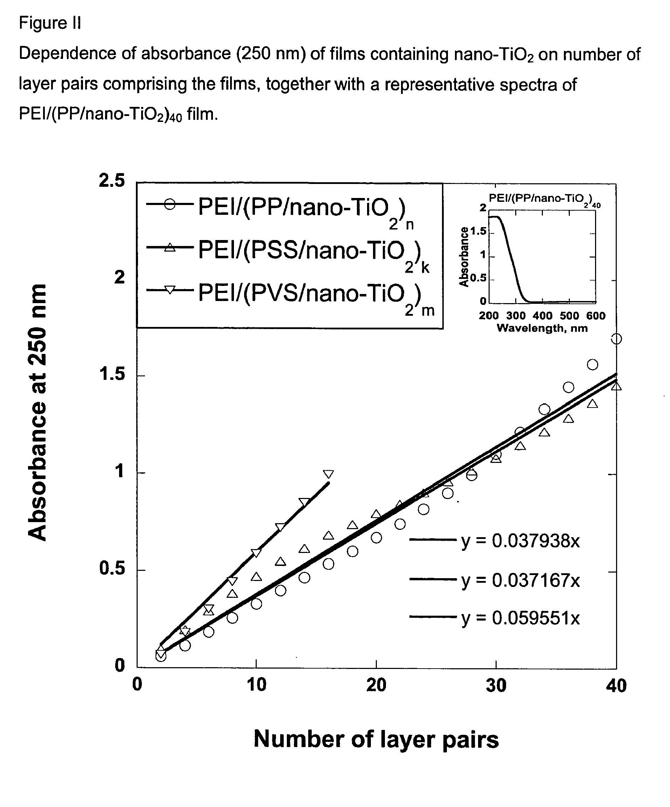

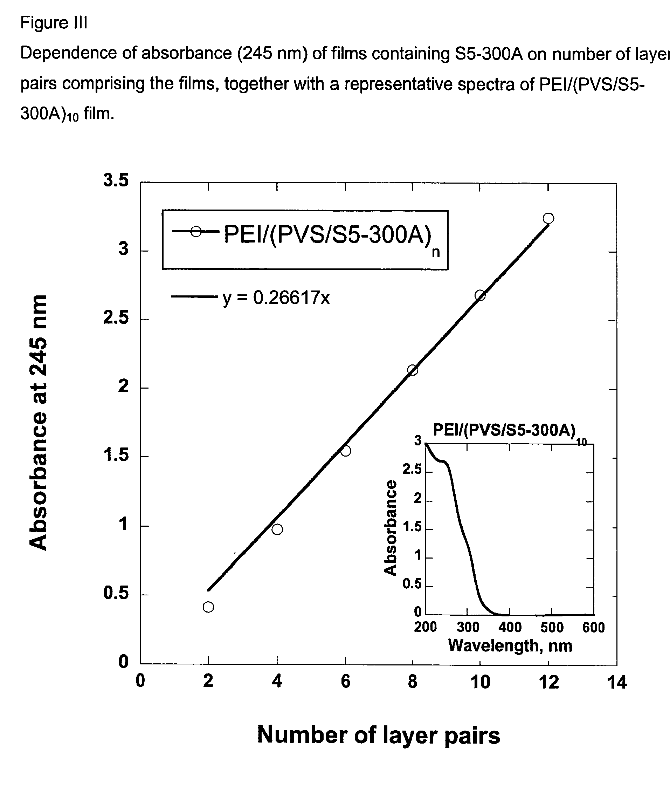

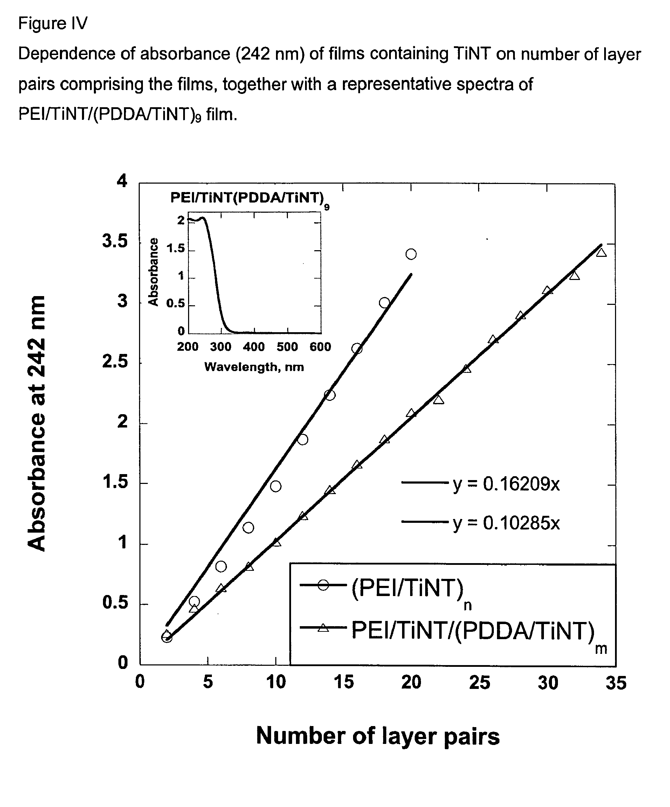

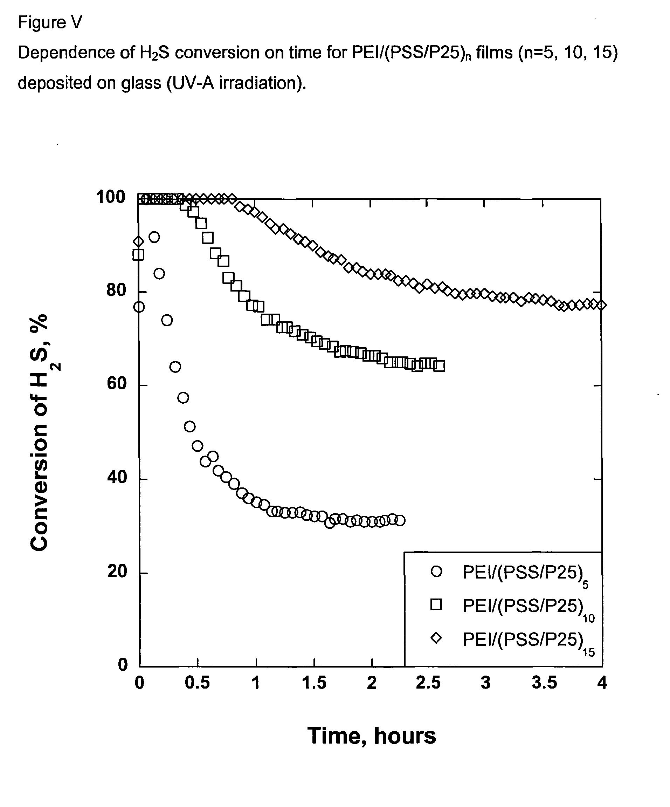

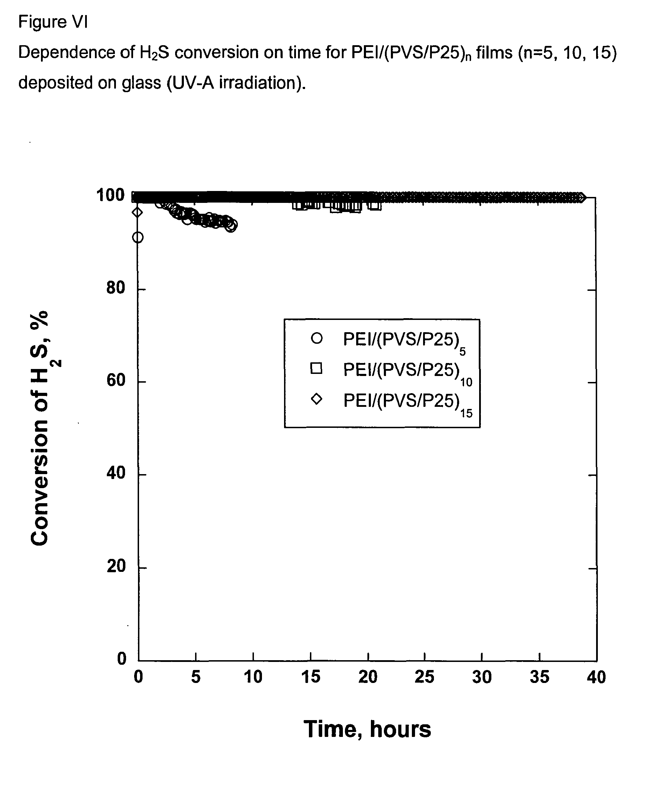

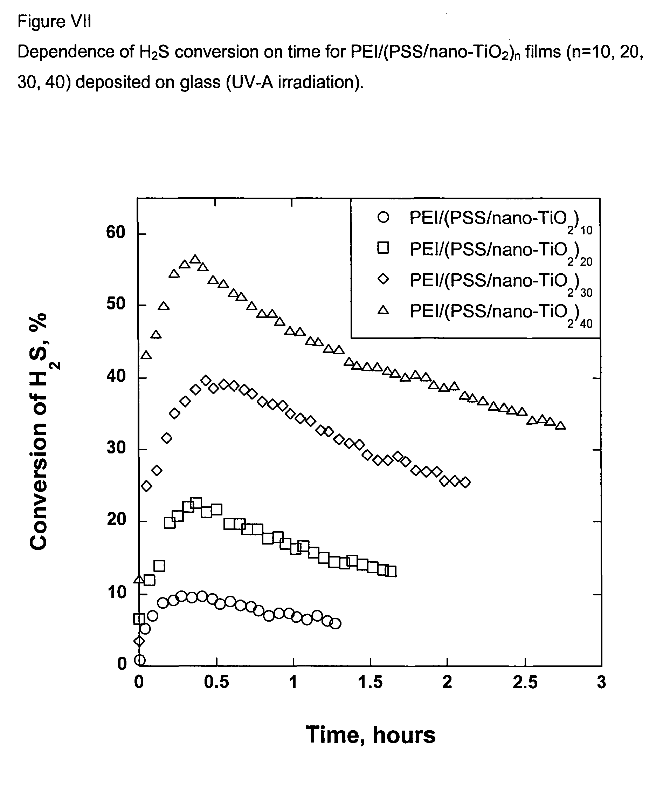

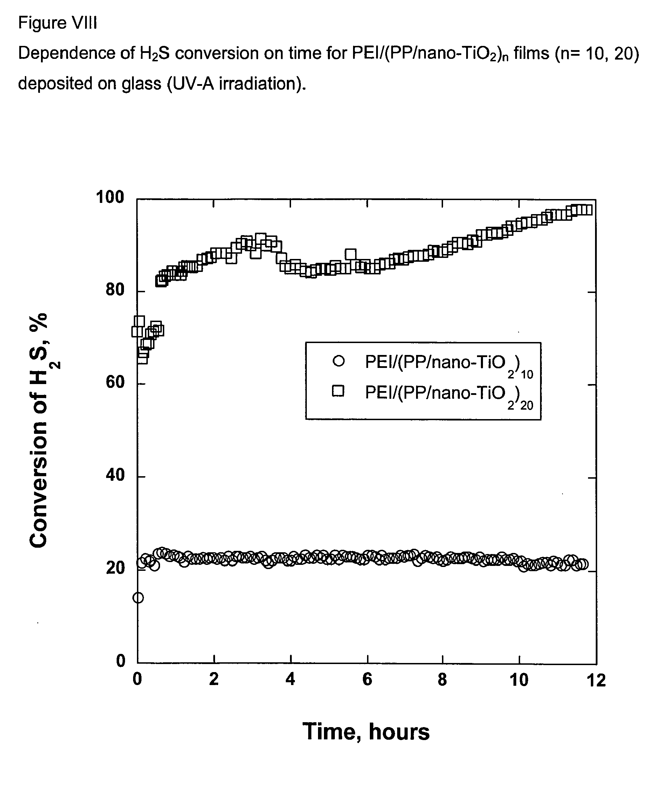

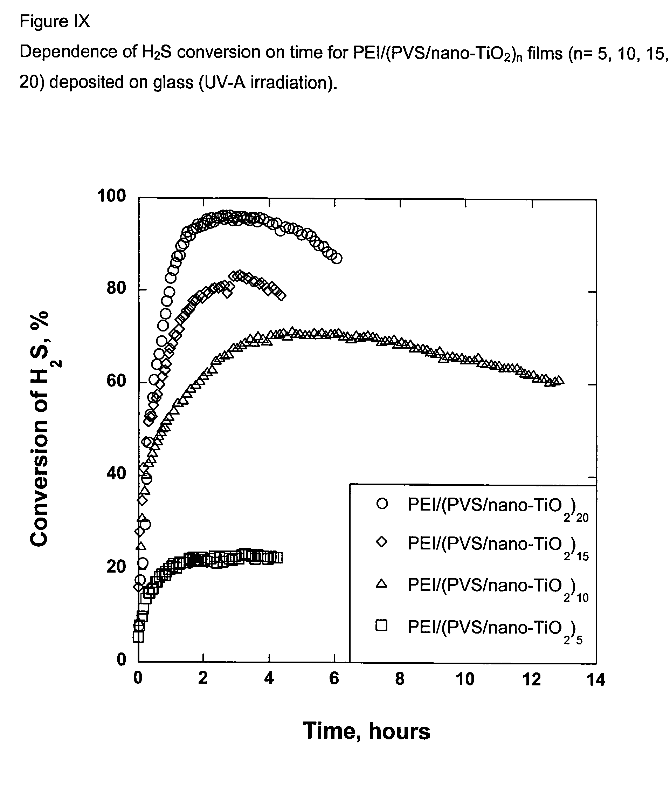

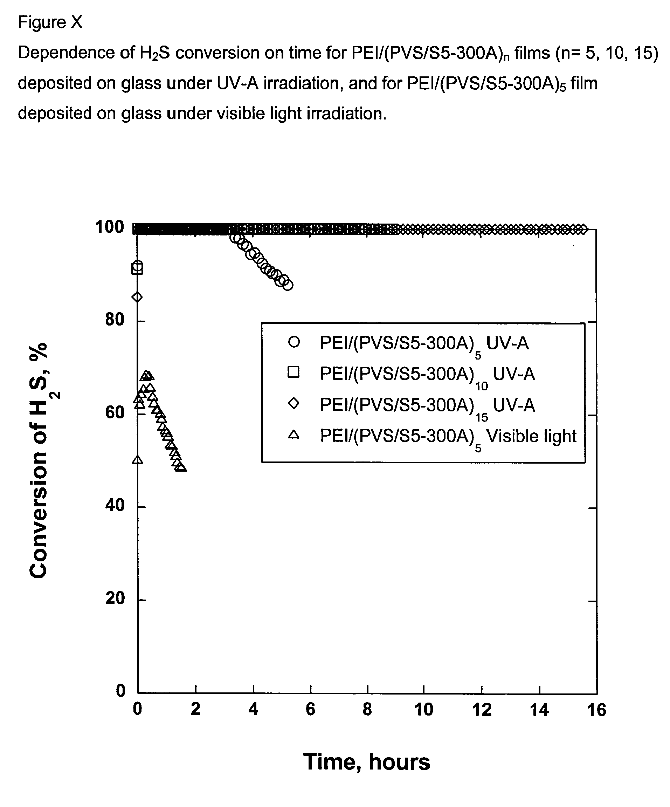

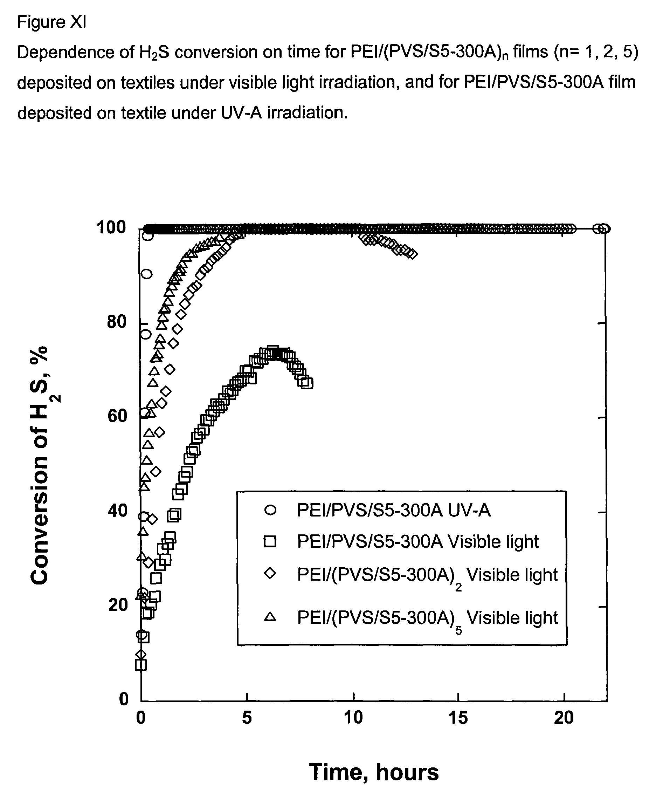

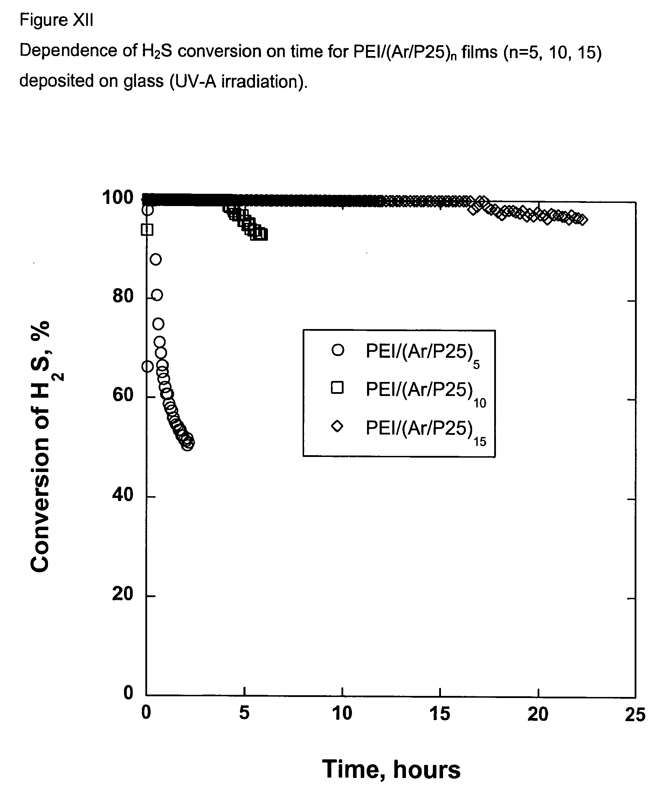

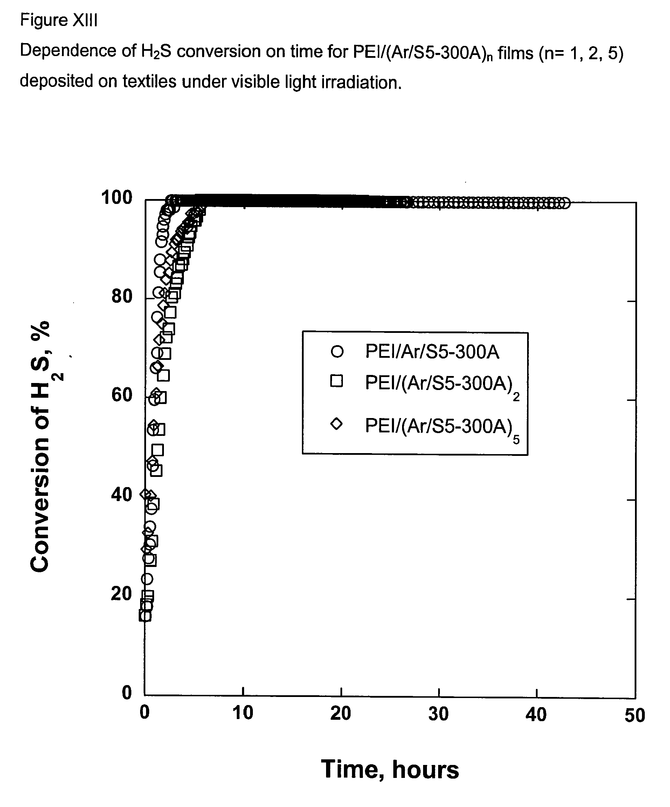

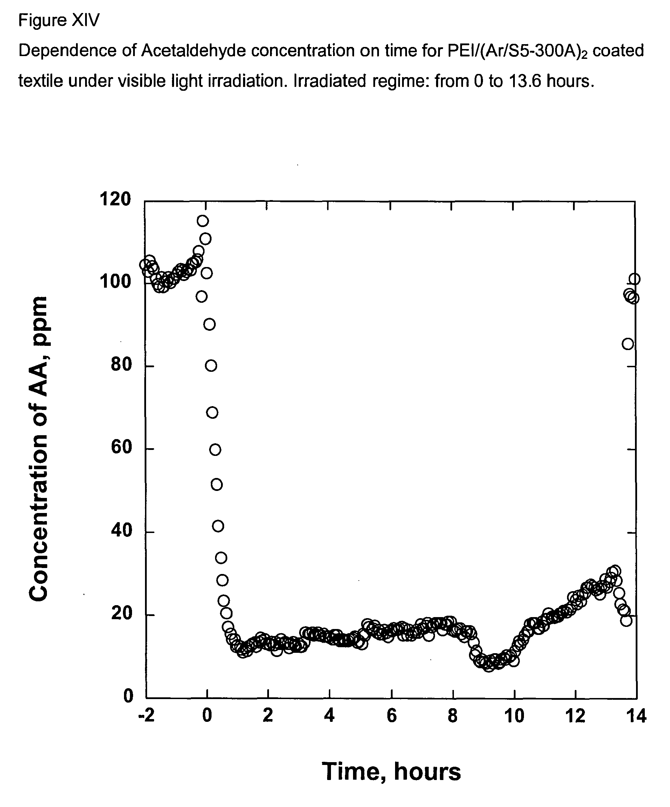

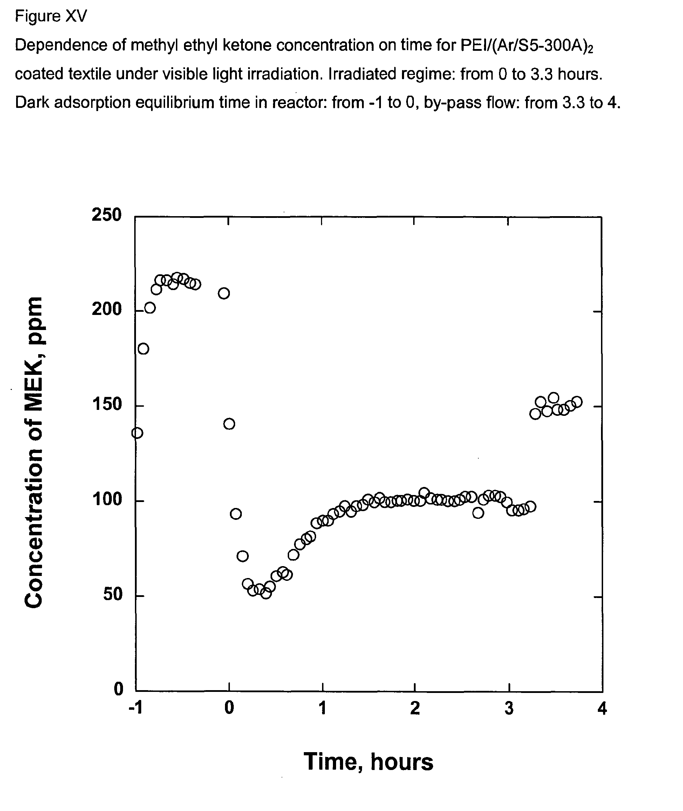

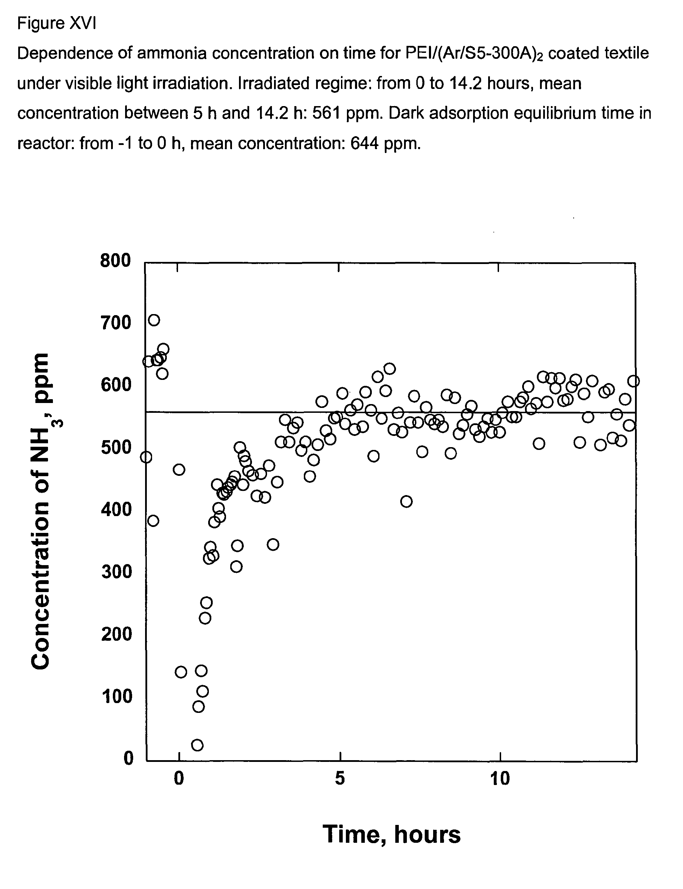

**Claims**

1.  Photocatalytically active textile or paper tissue for removal and decomposition of organic and inorganic pollutants from the surrounding atmosphere under visible light and/or UV-A irradiation comprising a woven or non-woven support and a coating layer, which comprises catalytically active $TiO_2$

2.  Textile or paper tissue according to claim 1, wherein the supports comprises fibrous materials, particularly textile materials or paper materials, natural, synthetic or semi-synthetic materials and blends thereof, modified or regenerated cellulose, natural or synthetic polyamide or fully synthetic polyamides, polyester, polyurethane or polyacrylonitrile , and blends thereof.

3.  Textile or paper tissue according to claim 1, wherein the coating is prepared by a variety of combinations of two or more of the following deposition steps:

    a) deposition of polycation,
    b) deposition of polyanion,
    c) deposition of catalytic particles,
    d) deposition of particles of adsorbent.

4.  Textile or paper tissue according to any of the preceding claims, wherein the $TiO_2$ based catalysts includes without limitations $TiO_2$ itself in different forms, materials obtained from $TiO_2$ such as titanate nanotubes TiNT, and modified $TiO_2$, preferably modified by doping with metals or non-metal elements, another semiconductor or by sensitization with a suitable sensitizer.

5.  Textile or paper tissue according to any of the preceding claims, wherein concentrations of the deposition suspensions of catalysts range from 0.01 % w/v to 25 % w/v.

6.  Textile or paper tissue according to any of the preceding claims, wherein the deposition suspension contains from 0.1 % w/v to 5 % w/v of surface-active agents.

7.  Textile or paper tissue according to claim 6, wherein the surface-active agents are glycol, polyethylene glycol, polyethylene glycolphenyl ether, polyethylene glycol ether, polyoxyethylene stearyl ether, polyethylene glycolhexadecyl ether, polyethylene glycol octadecyl ether or polyethylene glycol dodecyl ether.

8.  Textile or paper tissue according to at least one of the preceding claims, wherein the thickness of coating is in the range of 50 nm to 1 $\mu$m.

9.  Textile or paper tissue according to at least one of the preceding claims, wherein coating is prepared by alternate deposition of non-calcined titanate nanotubes (TiNT) with a positively charged polymer, then the deposition of several interstitial polyelectrolyte layer pairs, and finally by the alternate deposition of highly active catalyst with a negatively charged polymer.

10. Textile or paper tissue according to at least one of the preceding claims, wherein the tissue or textile is used for indoor and outdoor air cleaning, in particular for odor control and air cleaning in indoor environment.

11. Textile or paper tissue according to claim 10, wherein the destruction of the odors or VOC is accomplished under visible light irradiation.

12. Process for the production of a textile or paper tissue according to at least one of the preceding claims, wherein the layers are applied to the fabric by the Layer-by-Layer (LbL) method by deposition of a catalytic $TiO_2$ layer from a suspension on woven or non-woven fabrics by padding, dipping, spraying techniques or combinations thereof.

13. Process according to claim 12, wherein deposition is carried out at temperatures of 15 - 40 ˚C.

14. Process according to claim 12 and/or 13, wherein the deposition is carried out at a pH in the range from 2.5 to 9.5.

Figure I

Dependence of film thickness (nm) on number of deposited P25 layers indicating linear growth of LbL films containing P25.

Figure I A

SEM image: edge view of PEI/(PSS/P25)$_{10}$ film.

IPCMS          SEI      2.0kV          100nm    WD 3.0mm

Figure I B

Dependence of absorbance (300 nm) of films containing P25 on number of layer pairs comprising the films, together with a representative spectra of PEI/(Ar/P25)$_6$ film.

Figure II

Dependence of absorbance (250 nm) of films containing nano-$TiO_2$ on number of layer pairs comprising the films, together with a representative spectra of PEI/(PP/nano-$TiO_2$)$_{40}$ film.

Figure III

Dependence of absorbance (245 nm) of films containing S5-300A on number of layer pairs comprising the films, together with a representative spectra of PEI/(PVS/S5-300A)$_{10}$ film.

Figure IV

Dependence of absorbance (242 nm) of films containing TiNT on number of layer pairs comprising the films, together with a representative spectra of PEI/TiNT/(PDDA/TiNT)$_9$ film.

Figure V

Dependence of H$_2$S conversion on time for PEI/(PSS/P25)$_n$ films (n=5, 10, 15) deposited on glass (UV-A irradiation).

Figure VI

Dependence of $H_2S$ conversion on time for PEI/(PVS/P25)$_n$ films (n=5, 10, 15) deposited on glass (UV-A irradiation).

Figure VII

Dependence of $H_2S$ conversion on time for $PEI/(PSS/nano\text{-}TiO_2)_n$ films (n=10, 20, 30, 40) deposited on glass (UV-A irradiation).

Figure VIII

Dependence of H$_2$S conversion on time for PEI/(PP/nano-TiO$_2$)$_n$ films (n= 10, 20) deposited on glass (UV-A irradiation).

Figure IX

Dependence of $H_2S$ conversion on time for PEI/(PVS/nano-TiO$_2$)$_n$ films (n= 5, 10, 15, 20) deposited on glass (UV-A irradiation).

Figure X

Dependence of $H_2S$ conversion on time for $PEI/(PVS/S5-300A)_n$ films (n= 5, 10, 15) deposited on glass under UV-A irradiation, and for $PEI/(PVS/S5-300A)_5$ film deposited on glass under visible light irradiation.

Figure XI

Dependence of $H_2S$ conversion on time for PEI/(PVS/S5-300A)$_n$ films (n= 1, 2, 5) deposited on textiles under visible light irradiation, and for PEI/PVS/S5-300A film deposited on textile under UV-A irradiation.

Figure XII

Dependence of H₂S conversion on time for PEI/(Ar/P25)ₙ films (n=5, 10, 15) deposited on glass (UV-A irradiation).

Figure XIII

Dependence of $H_2S$ conversion on time for PEI/(Ar/S5-300A)$_n$ films (n= 1, 2, 5) deposited on textiles under visible light irradiation.

Figure XIV

Dependence of Acetaldehyde concentration on time for PEI/(Ar/S5-300A)$_2$ coated textile under visible light irradiation. Irradiated regime: from 0 to 13.6 hours.

Figure XV

Dependence of methyl ethyl ketone concentration on time for PEI/(Ar/S5-300A)$_2$ coated textile under visible light irradiation. Irradiated regime: from 0 to 3.3 hours. Dark adsorption equilibrium time in reactor: from -1 to 0, by-pass flow: from 3.3 to 4.

Figure XVI

Dependence of ammonia concentration on time for PEI/(Ar/S5-300A)$_2$ coated textile under visible light irradiation. Irradiated regime: from 0 to 14.2 hours, mean concentration between 5 h and 14.2 h: 561 ppm. Dark adsorption equilibrium time in reactor: from -1 to 0 h, mean concentration: 644 ppm.

**EUROPEAN SEARCH REPORT**

Application Number

EP 11 00 1600

Europäisches
Patentamt

European
Patent Office

Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 200829<br>Thomson Scientific, London, GB;<br>AN 2008-E17069<br>XP002650562,<br>& KR 100 741 170 B1 (KOREA INST ENERGY RES) 20 July 2007 (2007-07-20)<br>* abstract *<br>----- | 1-14 | INV.<br>D06M11/46<br>B01J21/06<br>B01J35/06<br>D21H21/14 |
| X | DATABASE WPI<br>Week 200325<br>Thomson Scientific, London, GB;<br>AN 2003-250961<br>XP002650563,<br>& JP 2002 284614 A (GAIA KK)<br>3 October 2002 (2002-10-03)<br>* abstract *<br>----- | 1-7 | |
| X | DATABASE WPI<br>Week 200942<br>Thomson Scientific, London, GB;<br>AN 2009-J47744<br>XP002650564,<br>& CN 101 428 209 A (UNIV BEIJING CHEM TECHNOLOGY) 13 May 2009 (2009-05-13)<br>* abstract *<br>----- | 1,2,10, 11 | TECHNICAL FIELDS SEARCHED (IPC)<br><br>D06M<br>B01J<br>D21H |
| X | WO 2009/118479 A2 (CENTRE NAT RECH SCIENT [FR]; UNIV PASTEUR [FR]; KELLER-SPITZER VALERIE) 1 October 2009 (2009-10-01)<br>* claims; examples *<br>----- | 1-4,8-14 | |

The present search report has been drawn up for all claims

| Place of search | Date of completion of the search | Examiner |
|---|---|---|
| Munich | 15 July 2011 | Koegler-Hoffmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 1600

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | | Publication date | Patent family member(s) | Publication date |
|---|---|---|---|---|
| KR 100741170 | B1 | 12-07-2007 | NONE | |
| JP 2002284614 | A | 03-10-2002 | NONE | |
| CN 101428209 | A | 13-05-2009 | NONE | |
| WO 2009118479 | A2 | 01-10-2009 | CA 2717811 A1 | 01-10-2009 |
| | | | EP 2268860 A2 | 05-01-2011 |
| | | | FR 2928379 A1 | 11-09-2009 |
| | | | JP 2011517295 A | 02-06-2011 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010021971 A, Hammond

- FR 0801232

**Non-patent literature cited in the description**

- **WANG, S. ; ANG, H. M. ; TADE, M. O.** *Environment International,* 2007, vol. 33, 694-705
- **LINSEBIGLER, A. L. ; LU, G. ; YATES, JR, J. T.** *Chem. Rev.,* 1995, vol. 95, 735-758
- **KROGMAN, K. C. ; ZACHARIA, N. S. ; GRILLO, D. M. ; HAMMOND, P. T.** *Chem. Mater.,* 2008, vol. 20, 1924-1930
- **SHIBATA, T. ; SAKAI, N. ; FUKUDA, K. ; EBINA, Y. ; SASAKI, T.** *Phys. Chem. Chem. Phys.,* 2007, vol. 9, 2413-2420

- **LIU, Z. ; ZHANG, X. ; NISHIMOTO, S. ; JIN, M. ; TRYK, D. A. ; MURAKAMI, T. ; FUJISHIMA, A.** *Langmuir,* 2007, vol. 23, 10916-10919
- **KASUGA, T. ; HIRAMATSU, M. ; HOSON, A. et al.** *Langmuir,* 1998, vol. 14, 3160-3163
- **BAHNEMANN, D. ; HENGLEIN, A. ; LILIE, J. ; SPANHEL., L.** *J. Phys. Chem.,* 1984, vol. 88, 709
- **KELLER, V. ; BERNHARDT, P. ; GARIN., F.** *J. Catal.,* 2003, vol. 215, 129-138